(19) Europäisches Patentamt
European Patent Office
Office européen des brevets

(11) **EP 2 017 447 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
***F02B 27/02*** *(2006.01)*

(21) Anmeldenummer: **08010669.3**

(22) Anmeldetag: **12.06.2008**

(54) **BRENNKRAFTMASCHINE**

COMBUSTION ENGINE

MOTEUR À COMBUSTION INTERNE

(84) Benannte Vertragsstaaten:
**DE FR GB IT**

(30) Priorität: **31.10.2007 DE 102007052310**
**16.07.2007 DE 102007033324**

(43) Veröffentlichungstag der Anmeldung:
**21.01.2009 Patentblatt 2009/04**

(73) Patentinhaber: **Dr. Ing. h.c. F. Porsche AG**
**70435 Stuttgart (DE)**

(72) Erfinder: **Theilemann, Ludwig, Dr.**
**75328 Schömberg-Schwarzenberg (DE)**

(56) Entgegenhaltungen:
**EP-A- 1 217 187        DE-A1- 3 908 475**
**DE-A1- 10 239 110      DE-A1-102007 033 324**

**Beschreibung**

Die Erfindung betrifft eine Brennkraftmaschine, insbesondere eine fremdgezündete Brennkraftmaschine, mit einem Verdichter gemäß dem Oberbegriff des Anspruchs 1.

Beim Betrieb von Brennkraftmaschinen werden üblicherweise Luftsauganlagen verwendet, welche eine Schwing- oder Resonanzrohraufladung oder eine Kombination dieser beiden Aufladungen erzielen. Bei einer aufgeladenen Brennkraftmaschine ergibt sich infolge der Verdichtung der angesaugten Verbrennungsluft eine Anhebung der Lufttemperatur. Der für Saugmotoren begehrte Aufladeeffekt durch Schwingrohraufladung oder Resonanzaufladung ist, insbesondere bei aufgeladenen Ottomotoren, unerwünscht, da durch die gasdynamische Kompression die Ladeluft erwärmt wird und dadurch die Neigung zu klopfender Verbrennung zunimmt. Ein Beispiel eines solchen Systems ist in der DE 3908475 gezeigt.

Zur Vermeidung einer weiteren Aufladung wird daher bei aufgeladenen Diesel- und Ottomotoren hinter dem Verdichter ein Ladeluftkühler zur Kühlung der Ladeluft positioniert. Hierdurch soll, insbesondere bei aufgeladenen Ottomotoren, die Gefahr eines klopfenden Motors minimiert werden. Eine weitere Reduzierung der Ladelufttemperatur ist durch einen vergrößerten Ladeluftkühler in der Regel aus baulichen Gründen nicht möglich. Demzufolge werden zur Erhöhung des Wirkungsgrades des Ladeluftkühlers stromab von diesem Entspannungseinrichtungen vorgesehen, um eine Verbrennungslufttemperatur weiter zu reduzieren. Aus der DE 100 02 482 A1 ist beispielsweise eine solche Vorrichtung zur Ladeluftkühlung bekannt, bei der die unter erhöhtem Ladedruck stehende Verbrennungsluft an einem Rückstauventil entspannt wird. Dabei ist das Rückstauventil zwischen dem Ladeluftkühler und der Luftsauganlage der Brennkraftmaschine positioniert.

Aus der DE 36 27 312 A1 ist ebenfalls zur Absenkung der Ladelufttemperatur eine Entspannungssteuervorrichtung bekannt, mit der eine adiabate Teilentspannung der aufgeladenen Luft erzielt wird. Dabei weist die Entspannungssteuervorrichtung einen düsenartigen Leitungsabschnitt auf, der nach Art einer Lavaldüse ausgebildet ist, wobei der düsenartige Leitungsabschnitt in der Ansaugleitung vor der Luftsauganlage angeordnet ist. Die aus dem Stand der Technik bekannten Maßnahmen zur Abkühlung der Ladeluft nach dem Austritt aus dem Ladeluftkühler erfordern die Anordnung einer Entspannungsvorrichtung in der Ansauganleitung und verursachen somit einen zusätzlichen baulichen Aufwand im Motorraum des Fahrzeuges.

Der Erfindung liegt daher die Aufgabe zugrunde, eine aufgeladene Brennkraftmaschine bereitzustellen, bei der eine optimierte Luftansaugung erzielt werden kann. Diese wird erfindungsgemäß durch eine Vorrichtung mit den Merkmalen des Anspruchs 1 gelöst.

Die erfindungsgemäße Brennkraftmaschine zeichnet sich dadurch aus, dass die Luftsauganlage derart ausgebildet ist, dass die Luftansaugung in den Brennraum während einer Expansionsphase der Luftmasse in der Luftsauganlage stattfindet. Demnach strömt mindestens ein Teil der Luftmasse in den Brennraum während der Expansionsphase ein. Dabei findet die Ladeluftexpansion teilweise im Plenum, im jeweiligen Saugrohr und/oder innerhalb des Verteilerrohres statt. Erfindungsgemäß ist eine kontinuierliche, aber nicht zwingend gleichmäßige, Expansion zwischen dem Eintritt der Verbrennungsluft in das Verteilerrohr bis zum Einströmen der Verbrennungsluft in den Brennraum, d.h., bis zum Austritt aus dem Saugrohr, erzielbar.

Erfindungsgemäß weist die Luftsauganlage eine derartige Verteilerrohrlänge auf, dass die Luftansaugung in den Brennraum der Brennkraftmaschine während einer Expansionsphase der Luftmasse in der Luftsauganlage stattfindet. Vorzugsweise ist die Verteilerrohrlänge so bemessen, dass zum Zeitpunkt der Luftansaugung eine Verringerung des Ladedruckes innerhalb der Luftsauganlage erzielbar ist. Mit der erfindungsgemäßen Ausgestaltung der Luftsauganlage, insbesondere der Bemessung der Verteilerrohrlänge, werden Resonanzeffekte bei maximaler Motorleistung vermieden, und zusätzlich ein Luftansaugverfahren ermöglicht, mit dem eine gezielte und auf den Ansaugzeitpunkt abgestimmte Expansion herbeigeführt wird.

Durch die erfindungsgemäße Ausgestaltung der Luftsauganlage wird ein Verfahren zur Luftansaugung ermöglicht, mit dem zum Zeitpunkt der Luftansaugung die Temperatur der durch den jeweiligen Zylinder angesaugten Luftmasse zwischen dem Plenum und dem Brennraum der Brennkraftmaschine verringert wird. Vorzugsweise erfolgt eine Verringerung der Luftmassentemperatur unterhalb eines Temperaturmittelwertes. Um einen solchen Temperaturmittelwert schwanken die Temperaturwerte der Luftmasse innerhalb der Luftsauganlage. Ein solcher Temperaturmittelwert stellt sich in etwa bei der Verteilerrohrmitte ein.

Die erfindungsgemäße Luftsauganlage zeichnet sich dadurch aus, dass die Verteilerrohrlänge in Abhängigkeit von einem äquivalenten Verteilerrohrdurchmesser bemessen ist. Hierdurch wird die schwingende Luft in der Luftsauganlage während der kühleren Expansionsphase in den jeweiligen Brennraum angesaugt, so dass eine relativ niedrige Temperatur des Brennstoff/Luft-Gemisches im Brennraum vorliegt.

Mit der erfindungsgemäßen Ausgestaltung der Luftsauganlage wird durch die erzielte Expansion eine effektive Kühlung der Ladeluft innerhalb der Luftsauganlage ohne den Einsatz von zusätzlichen beweglichen Bauteilen bewirkt. Dadurch wird eine kostengünstige und effiziente Luftsauganlage für aufgeladene Brennkraftmaschinen zur Verfügung gestellt, wobei sich die erfindungsgemäße Expansionsluftsauganlage sowohl für aufgeladene Otto- als auch für Dieselmotoren eignet.

In einer Ausgestaltung der Erfindung ist die Verteilerrohrlänge in Abhängigkeit von einer Nenndrehzahl der Brennkraftmaschine bemessen. Somit wird die vorliegende Luftsauganlage bei aufgeladenen Brennkraftmaschinen optimal eingesetzt und eine gezielte Abstimmung, insbesondere bei Sportfahrzeugen, für höhere Lastpunkte und Drehzahlen ermöglicht.

Mit der erfindungsgemäßen Luftsauganlage sinkt die Temperatur der angesaugten Luftmasse im Plenum unter dem Mittelwert während eines Kurbelwinkelbereiches zwischen 90° nach dem oberen Ladungswechsel-Totpunkt und 20° nach dem unteren Ladungswechsel-Totpunkt. Hierdurch können mehr als 20° Temperaturabsenkung erzielt werden. Folglich wird eine deutliche Verschiebung des Zündwinkels nach früh ermöglicht, so dass sich der Wirkungsgrad der Brennkraftmaschine verbessert. Durch den früheren Zündzeitpunkt sinkt die Abgastemperatur, so dass ein Anfettungsbedarf zum Schutz der Abgasturbine geringer wird. Als eine weitere Folge der Wirkungsgradverbesserung wird für die gleiche Motorleistung weniger Ladeluft und Kraftstoff benötigt, wodurch der gesamte Aufladeprozess der Brennkraftmaschine optimiert wird.

Nach einem weiteren Aspekt der der Erfindung erfolgt die Ausbildung der Verteilerrohrlänge in Abhängigkeit von dem äquivalenten Verteilerrohrdurchmesser derart, dass ein Verhältnis von äquivalentem Verteilerrohrdurchmesser zu Verteilerrohrlänge von 0,05 bis 0,14 vorliegt. Dabei sollte die Saugrohrlänge nicht mehr als 200 mm oder 150 mm, insbesondere bei einer Nenndrehzahl zwischen 5500 und 7000 Umdrehungen pro Minute, bemessen sein. Vorzugsweise beträgt dabei das Verhältnis von äquivalentem Verteilerrohrdurchmesser zu Verteilerrohrlänge 0,066, 0,114 oder 0,136. Hierdurch kommt innerhalb der Luftsauganlage eine optimierte Expansion der verdichteten Verbrennungsluft zustande, so dass die Verbrennungsluft aus der Luftsauganlage mit einer deutlich niedrigeren Temperatur in den Einlasskanal im Zylinderkopf einströmt.

Durch die neuartige geometrische Bestimmung des Verteilerrohrs der Luftsauganlage liegt im Vergleich zu den üblichen Sauganlagen ein Verteilerrohr mit einem kleinen Durchmesser vor, so dass der bauliche Aufwand im Motorraum optimiert wird. Die erfindungsgemäße Luftsauganlage kehrt durch die erfindungsgemäße Bemessung den bekannten Resonanzaufladeeffekt, insbesondere bei hohen Motordrehzahlen, komplett um. Anstelle einer Kompression wird eine Expansion der Verbrennungsluft erzielt und diese weiter abgekühlt. Somit liegt eine niedrigere Temperatur des Brennstoff/Luft-Gemisches im Brennraum vor, so dass der Zündzeitpunkt der Brennkraftmaschine leistungsoptimal einstellbar ist.

In einer weiteren Ausgestaltung der Erfindung weist die Brennkraftmaschine eine oder zwei Zylinderreihen auf, wobei die Anzahl der Zylinder insgesamt sechs beträgt. Gemäß der Erfindung hat sich bei einer fremdgezündeten 6-Zylinder-Brennkraftmaschine der Boxerbauart gezeigt, dass die vorliegende Luftsauganlage zu einer deutlichen Wirkungsgradverbesserung führt. Dennoch eignet sich die vorliegende Luftsauganlage ebenfalls für Brennkraftmaschinen mit vier Zylindern.

In einer Ausgestaltung der Erfindung sieht die vorliegende Erfindung zur weiteren Verbesserung der Zylinderfüllung, insbesondere bei aufgeladenen fremdgezündeten Brennkraftmaschinen, eine zusätzliche Erhöhung des Ladedruckes durch den Verdichter vor, um den verminderten Ladedruckbetrag durch die innerhalb der Luftsauganlage erzielte Expansion auszugleichen. Vorzugsweise wird bei gleicher Motorleistung ein höher Ladedruck um 3 bis 10 % als die üblichen Ladedrücke eingestellt. Dabei liegen die üblichen Ladedrücke zwischen 0,9 bar und 1,5 bar.

Durch einen höher eingestellten Ladedruck steigt nach dem Verdichter die Verbrennungslufttemperatur an, so dass durch das höher eingestellte Temperaturniveau der Verbrennungsluft im Ladeluftkühler eine größere Wärmemenge abgeführt wird. Gemäß der Erfindung liegt eine höhere Temperaturdifferenz über den Ladeluftkühler um etwa 3 bis 10 % als bei üblichen Ladedrücken vor. Dadurch kommt nach dem Ladeluftkühler eine Verbrennungslufttemperatur zustande, die nur geringfügig höher liegt als die mit einer üblichen bzw. konventionellen Aufladung, da die abgeführte Wärmemenge am Ladeluftkühler bis zu 55 % höher liegt als bei üblichen Ladedruckverhältnissen. Der hier durch den Einsatz der erfindungsgemäßen Luftsauganlage zusätzlich erzielte thermische Gewinn führt zu einer niedrigeren Temperatur des Brennstoff/Luft-Gemisches im Brennraum, da sowohl das Druck- als auch das Temperaturniveau im Brennraum zum Einlassventilschließzeitpunkt zwischen 3 und 4 % niedriger liegt als bei üblichen Luftsauganlagen. Folglich kann bei einem Sportfahrzeug mit einem aufgeladenen Motor, insbesondere bei hohen Lastpunkten und Drehzahlen, bei gleicher Motorleistung ein günstiger Kraftstoffverbrauch oder eine höhere Motorleistung beim gleichen Kraftstoffverbrauch erzielt werden.

In einer weiteren vorteilhaften Ausgestaltung der Erfindung erfolgt bei der erfindungsgemäßen Brennkraftmaschine durch den Einsatz eines Abgasturboladers mit einer verstellbaren Turbinengeometrie in Verbindung mit der erfindungsgemäßen Expansionsluftsauganlage eine ständige Anpassung der erzielten Expansion der Verbrennungsluft innerhalb der Luftsauganlage an den Betriebszustand des Motors. Hierdurch kann bei der erfindungsgemäßen Brennkraftmaschine eine Optimierung des Zündzeitpunktes und daher eine weitere Wirkungsgradverbesserung erreicht werden.

Weitere Merkmale und Merkmalkombinationen ergeben sich aus der Beschreibung. Konkrete Ausführungsbeispiele der Erfindung sind in den Zeichnungen vereinfacht dargestellt und in der nachfolgenden Beschreibung näher erläutert. Dabei zeigen:

Fig. 1    eine Abbildung einer erfindungsgemäßen Luftsauganlage einer aufgeladenen Brennkraftmaschine mit in zwei Reihen angeordneten Zylindern,

Fig. 2    eine schematische Darstellung der Luftsauganlage nach Fig. 1 gemäß einem ersten Ausführungsbeispiel,

Fig. 3    eine schematische Darstellung der Luftsauganlage nach Fig. 1 gemäß einem zweiten Ausführungsbeispiel,

Fig. 4    eine schematische Darstellung einer erfindungsgemäßen Luftsauganlage einer Brennkraftmaschine mit in einer Reihe angeordneten Zylindern gemäß einem dritten Ausführungsbeispiel ,

Fig. 5    eine schematische Darstellung der Luftsauganlage nach Fig. 4 gemäß einem vierten Ausführungsbeispiel,

Fig. 6    eine schematische Darstellung der Luftsauganlage nach Fig. 1 gemäß einem fünften Ausführungsbeispiel,

Fig. 7    eine schematische Darstellung der Luftsauganlage nach Fig. 4 gemäß einem sechsten Ausführungsbeispiel,

Fig. 8    ein schematisches Diagramm vom Druck-, Temperatur- und Massenstromverlauf innerhalb der Luftsauganlage der erfindungsgemäßen Brennkraftmaschine,

Fig. 9    ein schematische Abbildung der Abmessungsverhältnisse der Luftsauganlage der erfindungsgemäßen Brennkraftmaschine,

Fig. 10    ein schematische Darstellung der Ladungstemperatur im Brennraum einer Brennkraftmaschine,

Fig. 11    eine schematische Darstellung der Auswirkung der Luftsauganlage nach Fig. 1 auf die Motorleistung einer Brennkraftmaschine,

Fig. 12    eine schematische Darstellung der Temperaturwerte der Zylinderladung im Brennraum einer erfindungsgemäßen Brennkraftmaschine zum Zeitpunkt "Einlassventil-Schließt" in Abhängigkeit von der eingestellten Drehzahl,

Fig. 13    einen Massenstrom- und Temperaturverlauf im Verteilerrohr der Luftsauganlage nach Fig. 1 zu einem Zeitpunkt vor dem Ladungswechsel-Totpunkt,

Fig. 14    einen Massenstrom- und Temperaturverlauf im Verteilerrohr der Luftsauganlage nach Fig. 1 zu einem Zeitpunkt nach dem Ladungswechsel-Totpunkt,

Fig. 15    einen Massenstrom- und Temperaturverlauf im Verteilerrohr der Luftsauganlage nach Fig. 1 zu einem Zeitpunkt zwischen Ladungswechsel-Totpunkt und dem unteren Totpunkt und

Fig. 16    einen Massenstrom- und Temperaturverlauf im Verteilerrohr der Luftsauganlage nach Fig. 1 beim unteren Totpunkt.

Eine Brennkraftmaschine 1 mit Aufladung weist mindestens einen Zylinder 2 auf, in dem ein nicht dargestellter Brennraum zwischen einem im Zylinder 2 längsverschieblich gehaltenen Kolben und einem Zylinderkopf gebildet ist. Die Brennkraftmaschine 1 saugt Verbrennungsluft durch einen Verdichter 8 an. Die Aufladung der Brennkraftmaschine 1 kann im Sinne der Erfindung durch einen Verdichter 8 zustande kommen, der als Bestandteil eines Abgasturboladers, eines mechanischen Kompressors oder eines elektrischen Kompressors ausgebildet ist. Durch die Kompression der Verbrennungsluft steigt die Ladelufttemperatur an. Um diese zu reduzieren, ist dem Verdichter 8 ein Ladeluftkühler 9 nachgeschaltet.

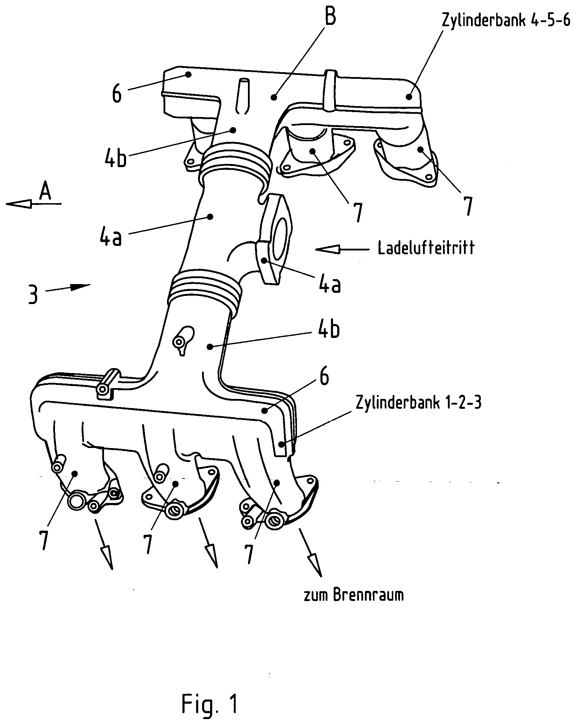

In Fig. 1 ist eine gemäß der Erfindung ausgebildete Luftsauganlage 3 abgebildet, bei der Ladeluft in ein Verteilerrohr 4 durch einen Luftführungskanal 5 gefördert wird. Die in Fig. 1 dargestellte Luftsauganlage 3 ist für eine Brennkraftmaschine 1 mit zwei Zylinderreihen derart ausgebildet, dass für jede Zylinderreihe ein Ansaugkrümmer bzw. Plenum 6 vorgesehen ist. Dabei erfolgt die Luftzufuhr in der Mitte des Verteilerrohres 4. Dort ist ein nicht dargestelltes Drosselklappengehäuse angeflanscht. Es sind an jedem Plenum 6 drei Saugrohre 7 pro Zylinderreihe vorgesehen, über die die Ladeluft dem nicht dargestellten Einlasskanal im Zylinderkopf und anschließend dem Brennraum zuführbar ist. Beide Plenen 6 sind an einem zentralen Verteilerrohr 4 angeschlossen. Dabei ist das jeweilige Plenum 6 mit den Saugrohren 7 einstückig ausgebildet. Gemäß der vorliegenden Erfindung ist zwischen den beiden Plenen 6 ein Verteilerrohr 4 angeordnet, das im vorliegenden Ausführungsbeispiel aus einem Verteilermodul 4a und aus zwei Rohrabschnitten 4b gebildet ist, welche mit dem jeweiligen Plenum einstückig ausgebildet sind. Die Anbindung kann mit Hilfe von Bandschellen oder mit einem bajonettähnlichen Verschluss erfolgen.

Erfindungsgemäß ist eine Verteilerrohrlänge $L_V$ in Abhängigkeit von einem äquivalenten Verteilerrohrdurchmesser $D_V$ derart bemessen, dass eine Verringerung des Ladedruckes der Verbrennungsluft innerhalb der Luftsauganlage 3 durch eine gezielte Expansion erfolgt, wobei die Expansion teilweise im Plenum und/oder innerhalb des Verteilerrohres stattfindet. Erfindungsgemäß findet die Expansion in einem Bereich zwischen einem Eintritt der Verbrennungsluft in das Verteilerrohr 4, z.B. ab dem Verteilermodul 4a, und einem Austritt aus dem Saugrohr 7 statt. Je nach Zündfolge der jeweiligen Zylinder 2 tritt innerhalb der Luftsauganlage eine Schwingung auf, wobei die Expansion der Ladeluft auf den jeweiligen Brennraum bezogen kontinuierlich innerhalb der Luftsauganlage, aber nicht zwingend gleichmäßig, erzielbar ist. Dadurch kann die Ladelufttemperatur beim Eintritt in den Brennraum und somit die Brennstoff/Luft-Gemischtemperatur im Brennraum abgesenkt werden, so dass die Motorleistung bei gleichzeitiger Absenkung des spezifischen Kraftstoffverbrauches gesteigert werden kann.

Gemäß der vorliegenden Erfindung wird die schwingende Luft in der Luftsauganlage 3 während der kühleren Expansionsphase für die Gemischaufbereitung angesaugt, wodurch die Temperatur des Brennstoff/Luft-Gemisches im Brennraum reduziert wird. Das führt zu einer deutlichen Steigerung der Effizienz. Beispielsweise wird bei maximaler Leistung eines Sechs-Zylinder-Boxermotors eine Verringerung des Kraftstoffverbrauchs um etwa 15 % erreicht.

Die vorliegende Erfindung zeichnet sich dadurch aus, dass die hier beschriebene Expansionssauganlage 3 sich für Brennkraftmaschinen 1 mit sechs oder vier Zylindern gut eignet. Für einen aufgeladenen Sechs-Zylinder-Motor ist die Verteilerrohrlänge Lv durch folgende Formel zu bestimmen:

$$200 - 4/3 * L_S + 1{,}7 * n_N^{-2{,}22} * (D_V - 30) < L_V < 7{,}2*10^6 / n_N - 1{,}5*L_S$$

Bei einem aufgeladenen Vier-Zylinder-Motor ist der Bereich für die Verteilerrohrlänge Lv, in dem die Expansionssauganlage vorteilhafte Ergebnisse erzielen kann, durch folgende Formel bestimmt:

$$34*D_V - 650 - 4/3*L_S < L_V$$

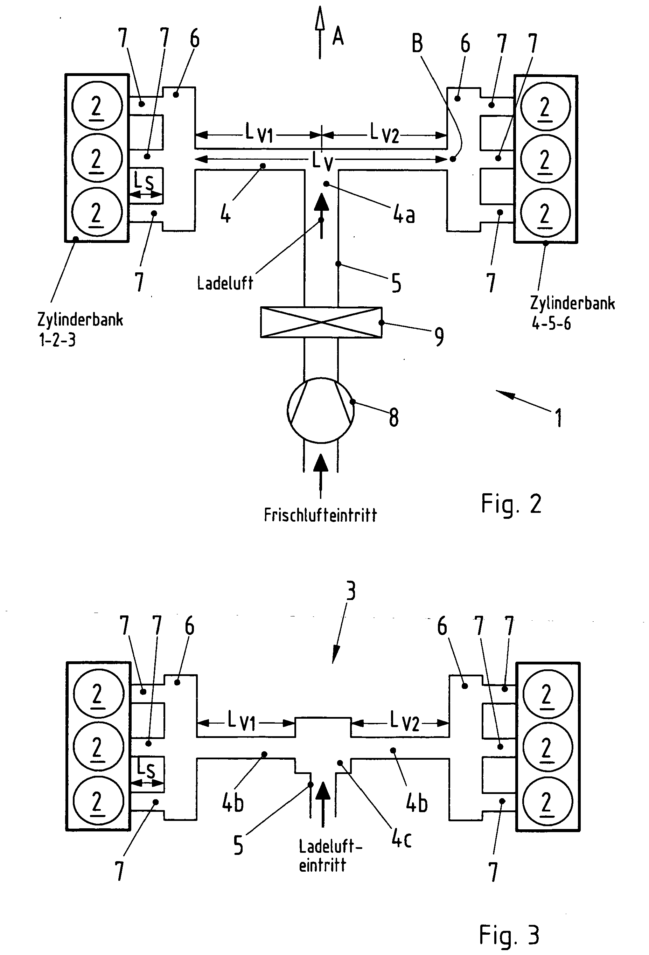

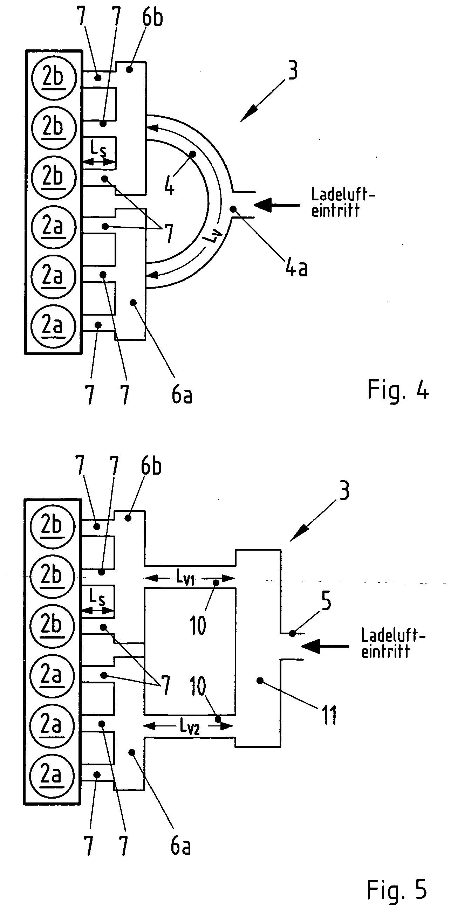

Dabei entspricht Ls einer Saugrohrlänge zwischen dem Plenum 6 und dem nicht dargestellten Zylinderkopf. Der Wert $L_V$ steht für die Verteilerrohrlänge, wobei diese sich je nach Ausführungsbeispiel unterschiedlich zu bestimmen ist. $L_V$ ist die Rohrlänge des Verbindungsrohres zwischen dem ersten und dem zweiten Plenum 6. Bei den Ausführungsbeispielen mit dem Behälter 4c bzw. 11 gemäß Fig. 3 bzw. 5 ist $L_V$ die Summe der Verteilerrohrabschnitte $L_V=L_{V1}+L_{V2}$. Weiterhin entspricht $n_N$ eine Nenndrehzahl der Brennkraftmaschine, bei der eine maximale Leistung erzielt wird.

Bei einem Verteilerrohr 4 mit veränderlicher Querschnittsfläche $A_V(x)$ ist das Innenvolumen $V_V$ des Verbindungsrohres durch folgende Formel zu bestimmen:

$$V_V = \int A_V(x)dx \ , \ \text{wobei } A_M = V_V/L_V$$

Dabei ist x die Wegkoordinate entlang einer Rohrmittellinie. Bereiche, in denen $A_V(x)$ größer ist als die doppelte mittlere Querschnittsfläche $A_M$ werden nicht als Rohr, sondern als Behälter gewertet und gehen nicht in die Berechnungen der Rohrlänge $L_V$ und des äquivalenten Verbindungsrohrdurchmessers $D_V$ ein.

Daraus ergibt sich der äquivalente Verbindungsrohrdurchmesser $D_V$ nach der Formel:

$$D_V = \sqrt{4A_M / \pi}$$

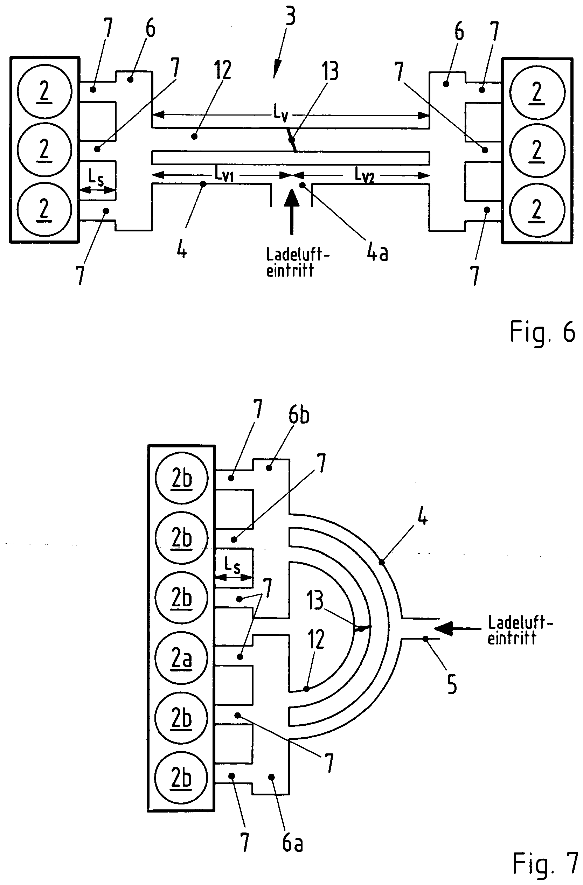

Bei dem ersten Ausführungsbeispiel gemäß Fig. 2 ist die Verteilerrohrlänge $L_V$ gleich dem Abstand zwischen den beiden Plenen 6 zu setzen. Bei dem zweiten Ausführungsbeispiel gemäß Fig. 3 setzt sich die Verteilerrohrlänge $L_V$ aus den Längen der beiden Abschnitten $L_{V1}$ und $L_{V2}$ zusammen, wobei beim dritten Ausführungsbeispiel gemäß Fig. 4 die Verteilerrohrlänge der Bogenlänge des Verteilerrohres 4 entspricht. Bei dem vierten Ausführungsbeispiel gemäß Fig. 5 setzt sich die Verteilerrohrlänge $L_V$ aus den beiden Abschnittslängen $L_{V1}$ und $L_{V2}$ zusammen. Bei dem fünften Ausführungsbeispiel ist gemäß Fig. 6 die Verteilerrohrlänge $L_V$ gleich dem Abstand zwischen den beiden Plenen 6 zu setzen, wobei beim sechsten Ausführungsbeispiel gemäß Fig. 7 die Verteilerrohrlänge der Bogenlänge des Verteilerrohres 4 entspricht.

Gemäß der Erfindung ergeben sich bei einer Auslegung der Expansionssauganlage 3 in Anlehnung an die obigen Formel vorteilhafte niedrige Temperaturen an der Einlassöffnung des Brennraumes. Insbesondere bei einer Verteilerrohrlänge von etwa 440 mm und einem äquivalenten Verteilerrohrdurchmesser $D_V$ von 50 oder 60 mm bzw. zwischen 50 und 60 mm sind hohe Expansionsgrade einstellbar. Dabei weisen die Saugrohre 7 eine Länge $L_S$ auf, die unterhalb 200 oder 150 mm liegt, vorzugsweise zwischen 110 und 140 mm. Demnach ist die Ausgestaltung der Verteilerrohrlänge $L_V$ in Abhängigkeit vom äquivalenten Verteilerrohrdurchmesser $D_V$ so zu wählen, dass sich ein Verhältnis von äquivalentem Verteilerrohrdurchmesser $D_V$ zu Verteilerrohrlänge $L_V$ in einem Bereich von 0,05 bis 0,14, insbesondere in einem Bereich von 0,06 bis 0,13 ergibt. Es hat sich dabei gezeigt, dass bei einem Sechs-Zylinder-Motor Verhältnisse von 0,066, 0,114 oder 0,136 bzw. Verhältnisse, die zwischen diesen Werten liegen, zu optimalen Ergebnissen im Sinne der vorliegenden Erfindung geführt haben, insbesondere wenn die Saugrohrlänge $L_S$ kürzer als 150 mm beträgt.

Die hier beschriebene Brennkraftmaschine 1 arbeitet nach dem Vier-Takt-Prinzip, wobei sich die vorliegende Erfindung ebenfalls für Zwei-Takt-Brennkraftmaschinen eignet. Die Längsbewegung des Kolbens erstreckt sich zwischen einem oberen Totpunkt OT und einem unteren Totpunkt UT. Im ersten Ansaugtakt der Vier-Takt-Brennkraftmaschine 1 wird dem Brennraum durch einen Einlasskanal bzw. ein Saugrohr 7 Verbrennungsluft zugeführt, wobei der Kolben sich in einer Abwärtsbewegung von einem Ladungswechsel-Totpunkt LW-OT bis zu einem unteren Ladungswechsel-Totpunkt UT bewegt. In einem nachfolgenden Kompressionstakt bewegt sich der Kolben in einer Aufwärtsbewegung bis zu einem oberen Zünd-Totpunkt ZOT, um den die Zündung vorgenommen wird. Danach expandiert der Kolben in einer Abwärtsbewegung bis zu einem unteren Totpunkt, wobei in einem letzten Takt der Kolben in einer Aufwärtsbewegung bis zu einem oberen Ladungswechsel-Totpunkt LW-OT die Gase aus dem Brennraum ausschiebt.

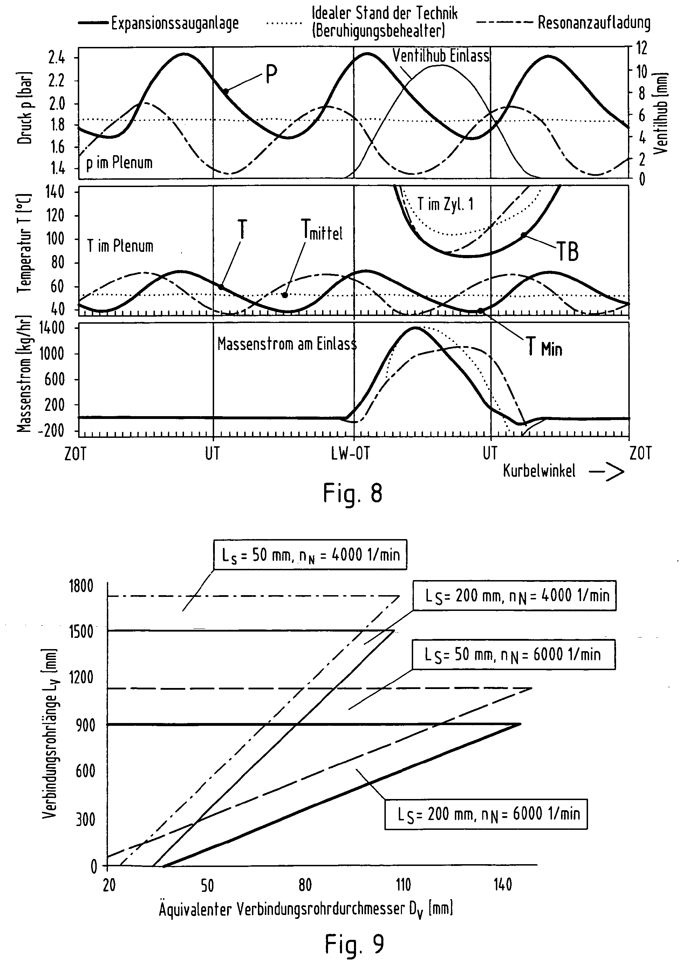

Die in Fig. 2 gezeigten Plenen 6 sind mit dem Verteilerrohr 4 verbunden, wobei dieses Verteilerrohr 4 derart ausgebildet ist, dass die Verbrennungsluft dem jeweiligen Brennraum zu einem Zeitpunkt zugeführt wird, zu dem im Plenum 6 ein Ladeluftdruck herrscht, der niedriger ist als der Ladeluftdruck, der im Luftführungskanal 5 herrscht. Zur Verdeutlichung des erzielten Effektes durch die erfindungsgemäße Luftsauganlage 3 sind in Fig. 8 einige Luftzustandsverläufe im Plenum 6 bzw. im Saugrohr 7 der Brennkraftmaschine 1 dargestellt. Dabei stellt die Kurve für den Beruhigungsbehälter einen idealisierten Stand der Technik dar. Dieses System ist mit einem sehr großen Ansaugvolumen derart ausgeführt, dass keine Druckschwingungen innerhalb der Ansauganlage auftreten. Hier dient ein solches System zur Bewertung, da es aus Package-, Gewichts- und Fahrbarkeitsgründen üblicherweise für die Praxis selten in Frage kommt.

Die Abmessungen der gegenübergestellten Luftsauganlagen gemäß Fig. 8 wurden zur besseren Veranschaulichung der charakteristischen Merkmale so gewählt, dass die typischen Unterschiede besonders deutlich hervortreten. Der gewählte Durchmesser des Resonanzrohres der zum Vergleich herangezogenen Resonanzsauganlage ist 120 mm, die Rohrlänge wurde für 6000 1/min abgestimmt. Die Ansaugbehälter bzw. Plenen 6 entsprechen denen eines Sportwagens mit sechs Zylindern. Die Saugrohre wurden in allen drei Beispielen gleich und extrem kurz mit 50 mm Länge angenommen.

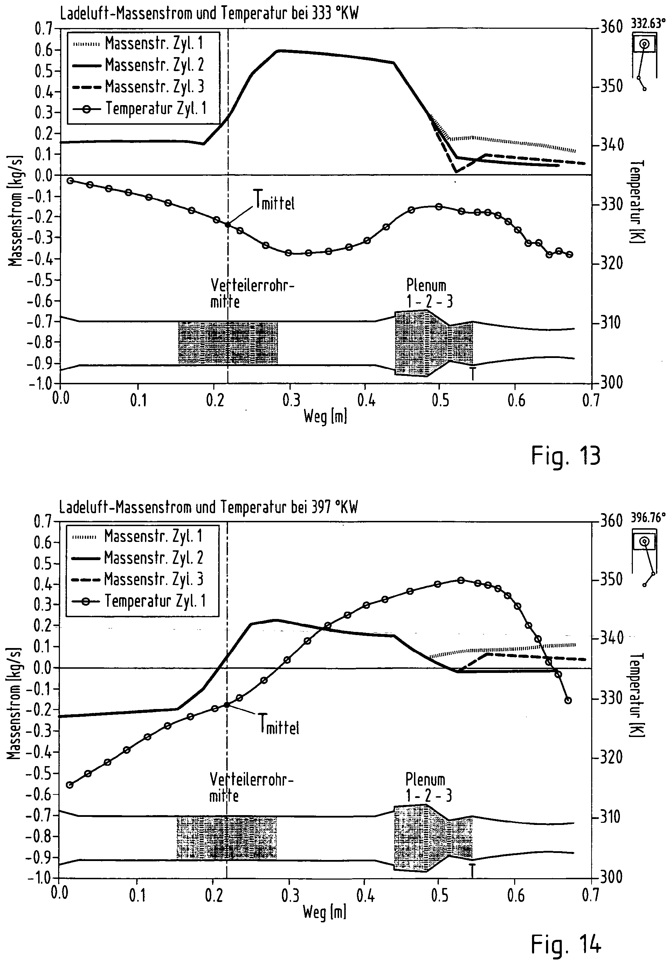

Im oberen Diagramm in Fig. 8 sind die Druckverläufe im Plenum 6 nach Fig. 13 bis 16 gezeigt. Beim Ansaugen aus dem Beruhigungsbehälter mit einem Volumen von etwa 15 Litern treten quasi keine Druckamplituden auf. Der konstante Druck im Behälter markiert den Ladedruck. Im Falle der Resonanzaufladung ist der Ladedruck P, also der zeitlich gemittelte Wert um etwa 0,25 bar niedriger, weil die Resonanzaufladung zur Aufladung durch den Verdichter hinzukommt. Bei der Expansionssauganlage liegt der Ladedruck P um etwa 0,25 bar über dem der Beruhigungsbehälteranlage und 0,5 bar über dem der Resonanzanlage. Die Druckamplituden sind deutlich höher als von Saugmotoren bekannt, da durch die höhere Dichte der Ladeluft entsprechend mehr Masse zwischen den Plenen 6 schwingt.

Gemäß Fig. 8 unterscheiden sich die Phasenlagen der Druckschwingung um ca. 70° Kurbelwinkel. Es sind dennoch durch andere Geometrien bis zu 90° Phasenunterschied möglich. Aufgrund der Phasenlage des Druckes P stellen sich unterschiedliche Massenstromverläufe am Einlass ein. Vergleicht man beispielsweise den Massenstromverlauf mit dem Temperaturverlauf im Plenum 6 der Zylinderbankreihe 1-2-3 gemäß Fig. 8 bzw. Fig. 13 bis 16, so sieht man, dass bei der Expansionssauganlage während 120 Grad Kurbelwinkel von 90 Grad nach dem oberen Ladungswechsel-Totpunkt LW-OT bis 20 Grad nach dem unteren Ladungswechsel-Totpunkt UT die Temperatur im Plenum 6 unter ihren Mittelwert $T_{mittel}$ sinkt.

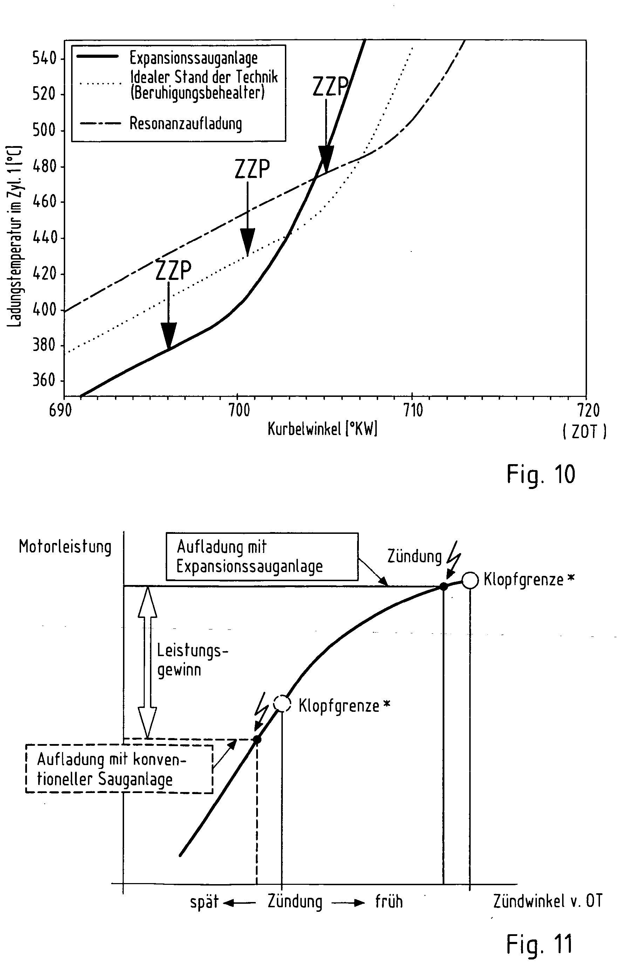

Das Ergebnis zeigt sich schließlich am Temperaturverlauf $T_B$ im Brennraum des ersten Zylinders. Im Vergleich zur Beruhigungsbehälter-Sauganlage, die den idealisierten Stand der Technik darstellen soll, wird eine Temperaturabsenkung um mehr als 20 Grad erzielt. Dieser Effekt ermöglicht gemäß Fig. 10 bei üblichen Motorauslegungen eine deutliche Verschiebung des Zündwinkels nach früh. Dadurch verbessert sich der Hochdruckwirkungsgrad, die Motorleistung steigt entsprechend Fig. 11. Mit früherer Zündung sinkt die Abgastemperatur, so dass der Anfettungsbedarf zum Schutz der Abgasturbine geringer wird.

Wie im oberen Diagramm aus Fig. 8 dargestellt ist, wird ein maximaler Ventilhub am Einlass in einer zweiten Hälfte des Ansaugtaktes eingestellt, d.h., zwischen dem oberen Ladungswechsel-Totpunkt LW-OT und dem unteren Totpunkt UT. Wie im mittleren Diagramm in Fig. 8 dargestellt ist, weist die Temperatur der Verbrennungsluft in der zweiten Hälfte des Ansaugtaktes durch die Expansion im Plenum 6 einen minimalen Temperaturwert $T_{min}$ auf. Die vorliegende Erfindung zeichnet sich dadurch aus, dass die erfindungsgemäße Luftsauganlage 3 derart ausgelegt ist, dass zum Zeitpunkt der Verbrennungsluftansaugung innerhalb der Luftsauganlage 3, insbesondere im Plenum 6 sowie in den Saugrohren 2, eine gasdynamische Expansion herrscht. Dadurch weist die Verbrennungsluft im wesentlichen eine niedrige Temperatur $T_{min}$ auf, wenn die Verbrennungsluft in den Brennraum einströmt.

Gemäß Fig. 3 ist ein zweites Ausführungsbeispiel dargestellt, bei dem in der Mitte des Verteilerrohres 4 anstelle des Verteilermoduls 4a ein Behälter 4c vorgesehen ist. Gemäß diesem Ausführungsbeispiel setzt sich die Verteilerrohrlänge $L_V$ aus den Abständen zusammen, die zwischen dem jeweiligen Plenum 6 und dem Behälter 4c liegen. Nach einem dritten Ausführungsbeispiel gemäß Fig. 4 weist die erfindungsgemäße Brennkraftmaschine 1 ebenfalls sechs Zylinder auf, welche in Reihe angeordnet sind. Dabei ist die Luftsauganlage 3 derart ausgebildet, dass die Verbrennungsluft derart aufgeteilt wird, dass für die drei vorderen Zylinder 2a ein erstes Plenum 6a vorgesehen ist, wobei für die übrigen drei Zylinder 2b ein zweites Plenum 6b vorgesehen ist. Hierzu ist das Verteilerrohr 4 bogenförmig ausgebildet, wobei die Verteilerrohrlänge LV der Bogenlänge entspricht. Gemäß der Erfindung kann das Verteilerrohr 4 je nach Zylinderanordnung und Motorbauweise im Rahmen des Erfindung in jeder denkbaren Form, z.B. bogenförmig, gerade oder eckig bzw. als eine Kombination aus unterschiedlichen Formen, ausgebildet sein.

Eine abgewandelte Form des dritten Ausführungsbeispiels ist in Fig. 5 gemäß einem vierten Ausführungsbeispiel dargestellt, wobei hier das Verteilerrohr 4 in zwei Abschnitten aufgeteilt ist, wobei zwischen dem Luftführungskanal 5 und den jeweiligen Verteilerrohrabschnitten 10 ein Behälter 11 positioniert ist. Bei diesem Ausführungsbeispiel setzt sich die Verteilerrohrlänge $L_V$ aus den beiden Verteilerrohrabschnittslängen $L_{V1}$ und $L_{V2}$ zusammen.

Nach einem fünften Ausführungsbeispiel der Erfindung gemäß Fig. 6 ist zwischen den Plenen 6 ein zusätzliches Verteilerrohr 12 angeordnet, das durch ein Schaltelement, hier als Klappe 13 ausgebildet, in Abhängigkeit von den Motorparametern zugeschaltet werden kann. Durch die im zusätzlichen Verteilerrohr 12 angeordnete Schaltklappe 13 ist die Größe des äquivalenten Verteilerdurchmessers $D_V$ einstellbar. Dadurch kann die erzielbare Expansion der Ladeluft in Abhängigkeit von der Drehzahl der Brennkraftmaschine 1 eingestellt werden. Die Anordnung eines zusätzlichen Verteilerrohrs 12 mit einer Schaltklappe 13 ist bei allen vorher beschriebenen Ausführungsbeispielen ebenfalls denkbar. Dabei ist je nach Form des Verteilerrohres ein oder zwei zusätzliche Verteilerrohre 12 an den entsprechenden Stellen zur Einstellung der Größe des äquivalenten Verteilerdurchmessers $D_V$ zu positionieren. Die in Fig. 7 abgebildete sechste Ausführungsform stellt eine abgewandelte Form der fünften Ausführungsform aus Fig. 4 dar.

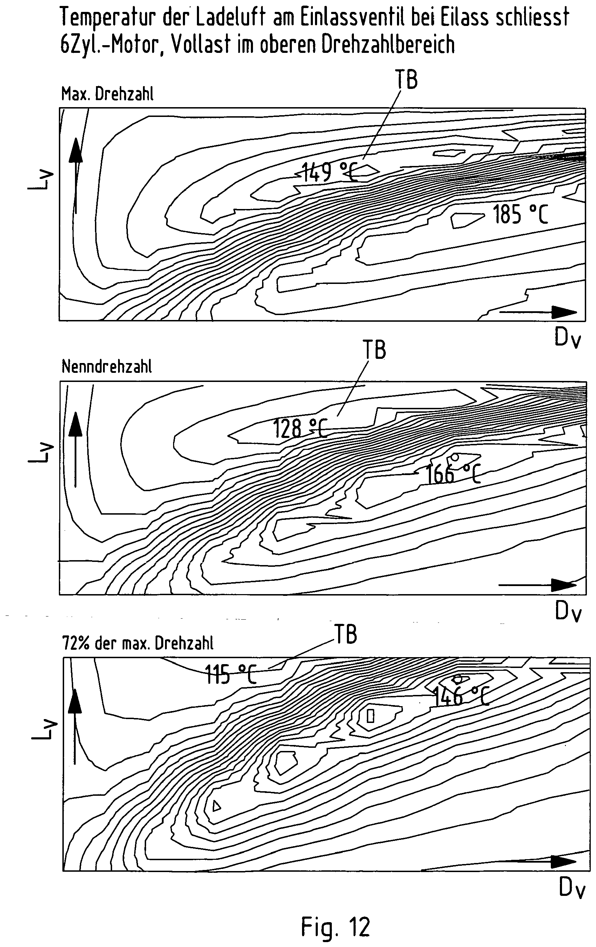

In Fig. 12 sind beispielhafte Verläufe der Ladungstemperatur $T_B$ im Brennraum nach Ende des Einströmens der expandierten Ladeluft in den Brennraum dargestellt. In den drei Abbildungen aus Fig. 12 sind unterschiedliche Temperaturwerte in Abhängigkeit von der Drehzahl der Brennkraftmaschine 1 dargestellt. Somit kann durch das zusätzliche schaltbare Verteilerrohr 12 in Abhängigkeit von den Betriebsparametern der Brennkraftmaschine, wie die Drehzahl, ein bestimmter äquivalenter Verteilerdurchmessers $D_V$ eingestellt und somit eine abgestimmte Expansion der Ladeluft erreicht werden. Demzufolge wird die Einstellung einer niedrigsten Temperatur der Ladeluft zum Eintrittszeitpunkt in den Brennraum in Abhängigkeit von den Betriebsparametern ermöglicht, so dass ein optimaler Wirkungsgrad bei dem jeweiligen Betriebspunkt der Brennkraftmaschine 1 vorliegt.

Die erfindungsgemäße Expansionssauganlage 3 und deren Ausgestaltung ist im Folgenden mit weiteren Einzelheiten näher erläutert. Die schematische Darstellung der in Fig. 9 dargestellten Abmessungsverhältnisse der Luftsauganlage 3 nach Fig. 1 sind in Anlehnung an die Temperaturverläufe der Ladeluft in Fig. 12 abgeleitet. Dabei stellen die in Fig. 9 dargestellten Dreiecke die Temperaturbereiche mit den niedrigen Temperaturwerten der Ladeluft aus Fig. 12 dar. Hier ist die Verteilerrohrlänge $L_V$ in Abhängigkeit von dem äquivalenten Verteilerrohrdurchmesser $D_V$ derart zu wählen, dass sich ein Schnittpunkt innerhalb eines der in Fig. 9 abgebildeten Dreiecke ergibt. Mit einer solchen Auslegung ergibt sich bei der erfindungsgemäßen Expansionssauganlage 3 am Einlass des Brennraumes eine Ladelufttemperatur $T_{Min}$, die niedriger als eine Mitteltemperatur $T_{mittel}$ ist.

Die geometrische Ausgestaltung der Luftsauganlage 3 führt zu einer derartigen Ladeluftexpansion, dass die Expansionsphase der Ladeluftschwingung in der zweiten Hälfte des zweiten Ansaugvorgangs gemäß Fig. 8, oberes Diagramm, liegt. In der zweiten Hälfte des Ansaugvorganges kommen gemäß Fig. 8 bei der Expansionsphase die niedrigsten Temperaturwerte der Ladeluft zustande. Durch die relativ kalten angesaugten Luftmassen ergibt sich dann erfindungsgemäß eine Brennraumzylinderfüllung mit einer relativ niedrigeren Temperatur. Dieser Effekt bewirkt eine Verschiebung der Klopfgrenze in Richtung früh gemäß Fig. 11, so dass eine frühere Zündung ermöglicht wird.

Folglich kann die Motorleistung erhöht werden, indem der Zündzeitpunkt der Brennkraftmaschine 1 früher eingestellt wird als bei einer wärmeren Zylinderfüllung. Dies führt zu einem wesentlichen Leistungsgewinn. Denkbar ist durch die erzielte geringere Klopfneigung eine Anhebung des Verdichtungsverhältnisses der Brennkraftmaschine.

Um die erzielte Expansion in der Luftsauganlage 3 zu kompensieren, wird durch den Verdichter 8 ein angepasster Ladedruck eingestellt, der höher liegt als bei konventionellen aufgeladenen Brennkraftmaschinen. Eine Erhöhung des Ladedruckes mit der vorliegenden Expansionssauganlage 3 kann beispielsweise zwischen 0,15 und 0,3 bar höher als bei konventionellen Sauganlagen betragen. Durch eine solche Ladedruckerhöhung ergibt sich eine Ladelufttemperaturerhöhung um ca. 10 Grad vor dem Ladeluftkühler 9, wobei nach dem Ladeluftkühler 9 eine Ladelufttemperaturerhöhung von etwa 2 bis 3 Grad gemessen wird. Demnach wird durch die eingestellte Expansion eine weitere Reduzierung der Ladelufttemperatur bewirkt, so dass am Einlass des Brennraumes unter Beibehaltung des gewünschten Ladedruckniveaus eine niedrige Ladelufttemperatur als die üblichen Temperaturen gemäß Fig. 8 und 10 vorliegt. Daher wird der höhere Luftdurchsatz in den Brennraum beibehalten und gleichzeitig eine Leistungssteigerung durch die Verschiebung der Klopfgrenze der Brennkraftmaschine 1 gemäß Fig. 10 und 11 erzielt.

Die vorliegende Erfindung wird anhand der Luftsauganlage 3 für einen Sechs-Zylinder-Motor mit zwei Zylinderbänken detailliert erläutert. Im Vergleich zu einer klassischen Sauganlage bei einem solchen Motor ist das Verteilerrohr 4 der Luftsauganlage 3 länger und im Durchmesser kleiner, wobei die einzelnen Saugrohre 7 kürzer ausgebildet sind.

Mit der vorliegenden Erfindung kehrt die erfindungsgemäße Luftsauganlage den Resonanzaufladeeffekt bei höheren Motordrehzahlen um, so dass anstelle einer Kompression eine Expansion genutzt wird. Durch diese Expansion innerhalb der Luftsauganlage 3 wird die Luft ausgedehnt. Dadurch wird die Luft abgekühlt, so dass eine niedrigere Temperatur des Kraftstoff-Luft-Gemisches im Brennraum zustande kommt. Hierdurch lässt sich das kühlere Kraftstoff-Luft-Gemisch leistungsoptimiert zünden.

Gemäß Fig. 8 ist im Falle der Resonanzaufladung der Ladedruck, also der zeitlich ermittelte Wert um etwa 0,25 bar niedriger, weil die Resonanzaufladung zur Aufladung durch den Verdichter hinzukommt. Bei der erfindungsgemäßen Luftsauganlage 3 liegt dagegen der Ladedruck um etwa 0,25 bar über dem der Berührungsbehälteranlage und 0,5 bar über dem der Resonanzanlage. Dabei sind die Druckamplituden deutlich höher als von den Saugmotoren, da durch die höhere Dichte der Ladeluft entsprechend mehr Masse zwischen den Plenen 6 schwingt. Die Phasenlagen der Druckschwingungen unterscheiden sich um ca. 70° Kurbelwinkel. Aufgrund der Phasenlage des Druckes stellen sich unterschiedliche Massenstromverläufe am Einlass gemäß dem unteren Diagramm in Fig. 8 ein. Im mittleren Diagramm in Fig. 8 ist dabei zu sehen, dass bei der erfindungsgemäßen Luftsauganlage 3 die Temperatur im Plenum 6 unter dem Mittelwert $T_{mittel}$ sinkt. Dieser Effekt wird deutlich im Temperaturverlauf, wo die Temperaturabsenkung um mehr als 20° während einer Ansaugphase zwischen 90° Kurbelwinkel nach dem Ladungswechsel-Totpunkt und 20° Kurbelwinkel nach dem unteren Totpunkt beträgt.

In den Fig. 13 bis 16 ist die räumliche Schwingungsform, wie sie bei der erfindungsgemäßen Luftsauganlage 3 auftritt, dargestellt. Hier wird der Massenstrom im Verteilerrohr und in den jeweiligen Saugrohren einer Zylinderbank dargestellt. Während des Motorbetriebs schwingt die Luftmasse innerhalb der Luftsauganlage 3 um die Verteilerrohrmitte infolge des zeitlichen versetzten Öffnens und Schließens der Einlassventile. Demnach schwingt die Luftmasse zwischen den beiden Plenen 6 hin und her um die Verteilerrohrmitte. Die unterschiedlichen Wegpositionen am rechten Ende der Fig. 13 bis 16 ergeben sich aus den unterschiedlichen Lauflängen durch das Plenum 6 der Zylinderbank, hier die Zylinder 1, 2 und 3. Aus Darstellungsgründen ist die Zylinderbank 1-2-3 in den Fig. 13 bis 16 auf der rechten Seite dargestellt. D.h., der Beobachter schaut gegen die Fahrtrichtung A des Fahrzeuges. Dabei beginnt der dargestellte Weg bei Null an einem Übergang B vom Plenum 6 der gegenüberliegenden Zylinderbank, hier der Zylinder 4, 5 und 6. Die Einleitung der Ladeluft durch einen Drosselklappenstutzen erfolgt demnach in der Mitte des Verteilerrohres, d.h. bei einem Weg von 0,22 Meter. Gemäß Fig. 13 strömt dann die Ladeluft überall in Richtung der Zylinderbank 1-2-3, wobei die Abbildung in Fig. 13 eine Momentanaufnahme darstellt, welche einem Zeitpunkt kurz vor dem Ladungswechsel-Totpunkt LW-OT entspricht. Die Darstellung in Fig. 14 stellt ebenfalls eine Momentanaufnahme dar, die im Vergleich zur Fig. 13 einer Kolbenstellung entspricht, die 60° Kurbelwinkel später als der aus Fig. 13.

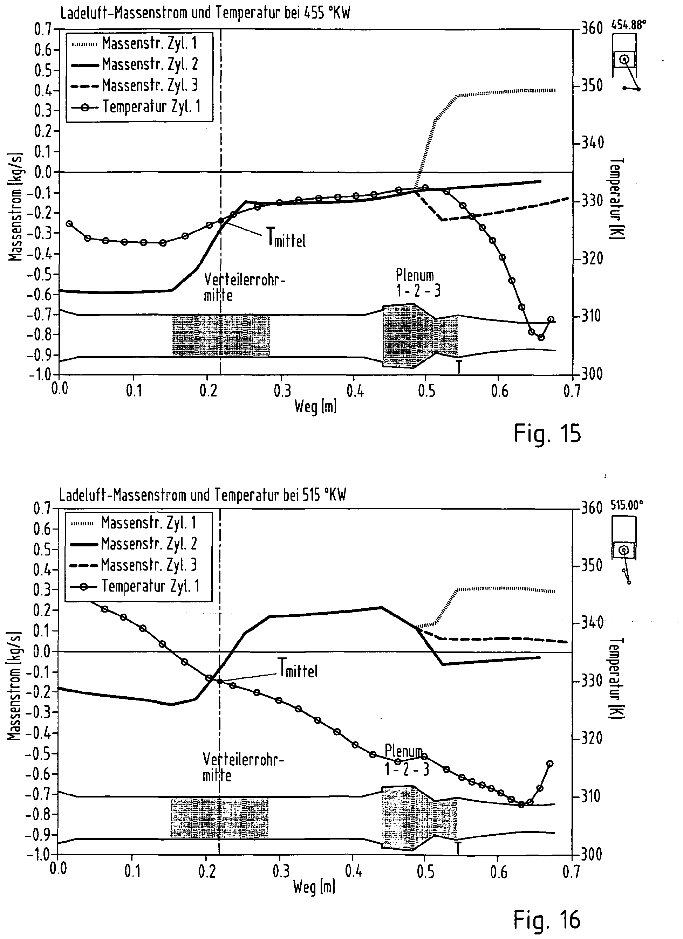

Darüber hinaus ist in Fig. 15 ebenfalls eine Momentanaufnahme dargestellt, die einem Zeitpunkt entspricht, zu dem der Kolben zwischen dem Ladungswechsel-Totpunkt und dem unteren Totpunkt liegt. In dieser Darstellung gemäß Fig. 15 ist der Luftansaugprozess für den Zylinder Nr. 1 dargestellt, wobei hier die Luftansaugung zwischen dem Zeitpunkt maximaler Kolbengeschwindigkeit und kurz vor Erreichen eines maximalen Einlassventilhubes erfolgt. Zu diesem Zeitpunkt schwingt die Ladeluft in der Sauganlage in Richtung der gegenüberliegenden Zylinderbank zu Zylinder Nr. 6. Bei der hier dargestellten Brennkraftmaschine liegt eine Zündfolge 1, 6, 2, 4, 3 und 5 vor. Demnach wird im Saugrohr 7 des Zylinders Nr. 1 die Luft nach rechts gezogen, so dass die Ladeluft im Plenum 6 expandiert. Hierdurch ergibt sich eine Lufttemperatur um mehr als 20° unter dem Mittelwert $T_{Mittel}$ gemäß Fig. 16. Gemäß den Fig. 13 bis 16 sind vier Zeitaufnahme innerhalb eines Zyklus der Ladeluftschwingung mit 240° Kurbelwinkelschwingungsdauer dargestellt. Das ergibt sich dadurch, dass die vorliegende Brennkraftmaschine drei Zyklen pro Vier-Takt-Zyklus innerhalb von 720° Kurbelwinkel durchläuft. Durch die erfindungsgemäße Luftsauganlage 3 wird eine nennenswerte Temperaturabsenkung der Ladeluft unterhalb des Mittelwertes $T_{Mittel}$ erzielt.

## Patentansprüche

1. Brennkraftmaschine (1) mit mehreren Zylindern (2), einer Luftsauganlage (3), einem Verdichter (8) zur Förderung der Verbrennungsluft, und einem im Zylinder (2) angeordneten Brennraum, der zwischen einem Kolben und einem Zylinderkopf begrenzt ist, wobei

   - die Luftsauganlage (3) aus mindestens einem Verteilerrohr (4), mehreren Saugrohren (7) und mindestens einem Plenum (6) gebildet ist, wobei das Plenum (6) zwischen dem Verteilerrohr (4) und den Saugrohren (7) positioniert ist, wobei
   - die Verbrennungsluft zur Luftsauganlage (3) über einen Luftführungskanal (5) gefördert wird, der in das Verteilerrohr (4) mündet, und
   - der Ladedruck (p) der Verbrennungsluft nach dem Austritt aus dem Verdichter (8) bis zum Eintritt in den Brennraum der Brennkraftmaschine (1) verringert wird,

   **dadurch gekennzeichnet, dass**

   - die Luftsauganlage (3) derart ausgebildet ist, dass mindestens ein Teil der Luftmasse in den Brennraum der Brennkraftmaschine (1) während einer Expansionsphase der Luftmasse in der Luftsauganlage einströmt, wobei eine kontinuierlich, aber nicht zwingend gleichmäßige, Expansion zwischen dem Eintritt der Verbrennungsluft in das Verteilerrohr (4) bis zum Einströmen der Verbrennungsluft in den Brennraum erzielbar ist.

**2.** Brennkraftmaschine (1) nach Anspruch 1, **dadurch gekennzeichnet, dass** eine Verteilerrohrlänge so bemessen ist, dass zum Zeitpunkt der Luftansaugung eine Verringerung des Ladedruckes (P) innerhalb der Luftsauganlage (3) erzielbar ist.

**3.** Brennkraftmaschine (1) nach Anspruch 1 oder 2, **dadurch gekennzeichnet, dass** zum Zeitpunkt der Luftansaugung die Temperatur der durch den jeweiligen Zylinder angesaugten Luftmasse zwischen dem Plenum (6) und dem Brennraum der Brennkraftmaschine (1) verringert wird.

**4.** Brennkraftmaschine (1) nach Anspruch 3, **dadurch gekennzeichnet, dass** die Verringerung der Luftmassentemperatur unterhalb des Temperaturmittelwertes ($T_{mittel}$) während eines Kurbelwinkelbereiches zwischen 50° nach dem oberen Ladungswechsel-Totpunkt (LW-OT) und 40° nach dem unteren Ladungswechsel-Totpunkt (UT), insbesondere zwischen 90° nach dem oberen Ladungswechsel-Totpunkt (LW-OT) und 20° nach dem unteren Ladungswechsel-Totpunkt (UT), erfolgt.

**5.** Brennkraftmaschine (1) nach einem der Ansprüche 1 bis 4, **dadurch gekennzeichnet, dass** die Luftsauganlage (3) derart ausgebildet ist, dass eine Verteilerrohrlänge (Lv) in Abhängigkeit von einem äquivalenten Verteilerrohrdurchmesser (Dv) bemessen ist.

**6.** Brennkraftmaschine (1) nach Anspruche 5, **dadurch gekennzeichnet, dass** die Ausgestaltung der Verteilerrohrlänge (Lv) in Abhängigkeit von einem äquivalenten Verteilerrohrdurchmesser (Dv) derart erfolgt, dass das Verhältnis von äquivalentem Verteilerrohrdurchmesser (Dv) zu Verteilerrohrlänge (Lv) 0,05 bis 0,14, oder 0,06 bis 0,13 beträgt.

**7.** Brennkraftmaschine (1) nach einem der Ansprüche 1 bis 6, **dadurch gekennzeichnet, dass** die Ausgestaltung der Luftsauganlage (3) derart erfolgt, dass die Saugrohrlänge ($L_S$) kürzer als 200 mm, oder als 150 mm beträgt.

**8.** Brennkraftmaschine (1) nach einem der Ansprüche 1 bis 7, **dadurch gekennzeichnet, dass** Luftsauganlage (3) zwei Plenen (6) aufweist, wobei das Verteilerrohr (4) aus einem Verteilermodul (4a) und zwei Verteilerrohrabschnitten (4b) gebildet ist, wobei jeder Verteilerrohrabschnitt (4b) zwischen dem Verteilermodul (4a) und einem der Plenen (6) positioniert ist.

**9.** Brennkraftmaschine (1) nach einem der Ansprüche 1 bis 8, **dadurch gekennzeichnet, dass** die Brennkraftmaschine (1) als eine fremdgezündete Brennkraftmaschine, insbesondere der Boxerbauart, ausgebildet ist, wobei die Anzahl der Zylinder (2) vier, sechs oder acht beträgt.

**10.** Brennkraftmaschine (1) nach einem der Ansprüche 1 bis 9, **dadurch gekennzeichnet, dass** die Verteilerrohrlänge (Lv) größer als eine Länge $L_1$ ist, die durch eine erste Fromel: $L_1 = 200 - 4/3 * L_S + 1,7 * n_N^{-2,22} * (D_V - 30)$ bestimmt ist, wobei Ls der jeweiligen Saugrohrlänge, $n_N$ der Nenndrehzahl der Brennkraftmaschine (1) und Dv dem äquivalenten Verteilerrohrdurchmesser entspricht.

**11.** Brennkraftmaschine (1) nach einem der Ansprüche 1 bis 9, **dadurch gekennzeichnet, dass** die Verteilerrohrlänge (Lv) kleiner als eine Länge ($L_2$) ist, die durch eine zweite Formel: $L_2 = 7,2*10^6/n_N - 1,5*L_S$ bestimmt ist, wobei Ls der jeweiligen Länge des Saugrohres (7) und $n_N$ der Nenndrehzahl der Brennkraftmaschine (1) entspricht.

**12.** Brennkraftmaschine (1) nach einem der Ansprüche 1 bis 9, **dadurch gekennzeichnet, dass** die Verteilerrohrlänge (Lv) größer als eine Länge ($L_3$) ist, die durch eine dritte Fromel: $L_3 = 34 * D_V - 650 * 4/3 L_S$ bestimmt ist, wobei Ls der jeweiligen Saugrohrlänge und Dv dem äquivalenten Verteilerrohrdurchmesser entspricht.

**13.** Brennkraftmaschine (1) nach einem der Ansprüche 1 bis 12, **dadurch gekennzeichnet, dass** ein zweites schaltbares Verteilerrohr (12) angeordnet ist.

**14.** Brennkraftmaschine (1) nach einem der Ansprüche 1 bis 13, **dadurch gekennzeichnet, dass** im zweiten Verteilerrohr (4) eine Schaltklappe (13) vorgesehen ist, mit der die Größe des äquivalenten Verteilerrohrdurchmessers (Dv) einstellbar ist.

**15.** Brennkraftmaschine (1) nach einem der Ansprüche 1 bis 14, **dadurch gekennzeichnet, dass** die Brennkraftmaschine (1) einen Abgasturbolader mit einer verstellbaren Turbinengeometrie aufweist.

**16.** Brennkraftmaschine (1) nach einem der Ansprüche 1 bis 15, **dadurch gekennzeichnet, dass** eine zusätzliche Erhöhung des Ladedruckes durch den Verdichter (8) einstellbar ist, wobei die eingestellten Ladedruckwerte zwischen 5 % und 15 % höher als ein Wert liegen, der zwischen 0,9 bar und 1,5 bar beträgt.

17. Brennkraftmaschine (1) nach einem der Ansprüche 1 bis 16, **dadurch gekennzeichnet, dass** die innerhalb der Luftsauganlage (3) erzielbare Expansion in Abhängigkeit von Betriebsparametern, insbesondere der Drehzahl ($n_N$) der Brennkraftmaschine (1), einstellbar ist.

**Claims**

1. Internal combustion engine (1) having multiple cylinders (2), having an air intake system (3), having a compressor (8) for feeding the combustion air, and having a combustion chamber which is arranged in the cylinder (2) and which is delimited between a piston and a cylinder head, wherein

   - the air intake system (3) is formed from at least one distributor pipe (4), multiple intake pipes (7) and at least one plenum (6), wherein the plenum (6) is positioned between the distributor pipe (4) and the intake pipes (7), wherein
   - the combustion air is fed to the air intake system (3) via an air-guiding duct (5) which opens into the distributor pipe (4), and
   - the charge pressure (p) of the combustion air is reduced between the exit from the compressor (8) and the entry into the combustion chamber of the internal combustion engine (1),

   **characterized in that**

   - the air intake system (3) is designed such that at least one part of the air mass flows into the combustion chamber of the internal combustion engine (1) during an expansion phase of the air mass in the air intake system, wherein it is possible to obtain a continuous, but not imperatively uniform, expansion between the entry of the combustion air into the distributor pipe (4) and the flow of the combustion air into the combustion chamber.

2. Internal combustion engine (1) according to Claim 1, **characterized in that** a distributor pipe length is dimensioned such that, at the time of the intake of air, it is possible to obtain a reduction in the charge pressure (P) within the air intake system (3).

3. Internal combustion engine (1) according to Claim 1 or 2, **characterized in that**, at the time of the intake of air, the temperature of the air mass which is sucked in by the respective cylinder is reduced between the plenum (6) and the combustion chamber of the internal combustion engine (1).

4. Internal combustion engine (1) according to Claim 3, **characterized in that** the reduction in the air mass temperature below the mean temperature value ($T_{mean}$) is realized during a crank angle range of between 50° after charge-exchange top dead centre (CE-TDC) and 40° after charge-exchange bottom dead centre (BDC), in particular of between 90° after charge-exchange top dead centre (CE-TDC) and 20° after charge-exchange bottom dead centre (BDC).

5. Internal combustion engine (1) according to one of Claims 1 to 4, **characterized in that** the air intake system (3) is designed such that a distributor pipe length (Lv) is dimensioned as a function of an equivalent distributor pipe diameter (Dv).

6. Internal combustion engine (1) according to Claim 5, **characterized in that** the configuration of the distributor pipe length (Lv) as a function of an equivalent distributor pipe diameter (Dv) is realized such that the ratio of equivalent distributor pipe diameter (Dv) to distributor pipe length (Lv) is 0.05 to 0.14, or 0.06 to 0.13.

7. Internal combustion engine (1) according to one of Claims 1 to 6, **characterized in that** the configuration of the air intake system (3) is realized such that the intake pipe length (Ls) is shorter than 200 mm, or than 150 mm.

8. Internal combustion engine (1) according to one of Claims 1 to 7, **characterized in that** the air intake system (3) has two plenums (6), wherein the distributor pipe (4) is formed from a distributor module (4a) and two distributor pipe sections (4b), wherein each distributor pipe section (4b) is positioned between the distributor module (4a) and one of the plenums (6).

9. Internal combustion engine (1) according to one of Claims 1 to 8, **characterized in that** the internal combustion engine (1) is designed as a spark-ignition internal combustion engine, in particular of the boxer type, wherein the number of cylinders (2) is four, six or eight.

10. Internal combustion engine (1) according to one of Claims 1 to 9, **characterized in that** the distributor pipe length (Lv) is greater than a length $L_1$ which is defined by a first formula: $L_1 = 200 - 4/3 * L_S + 1.7 * n_N^{-2.22} * (D_V - 30)$, where $L_S$ corresponds to the respective intake pipe length, $n_N$ corresponds to the nominal rotational speed of the internal combustion engine (1) and Dv corresponds to the equivalent distributor pipe diameter.

11. Internal combustion engine (1) according to one of Claims 1 to 9, **characterized in that** the distributor pipe length (Lv) is less than a length ($L_2$) which is defined by a second formula: $L_2 = 7.2 * 10^6 / n_N - 1.5 * L_S$, where $L_S$ corresponds to the respective length of the intake pipe (7) and $n_N$ corresponds to the nominal rotational speed of the internal combustion engine (1).

12. Internal combustion engine (1) according to one of Claims 1 to 9, **characterized in that** the distributor pipe length (Lv) is greater than a length ($L_3$) which is defined by a third formula: $L_3 = 34 * D_V - 650 * 4/3 L_S$, where $L_S$ corresponds to the respective intake pipe length and $D_V$ corresponds to the equivalent distributor pipe diameter.

13. Internal combustion engine (1) according to one of Claims 1 to 12, **characterized in that** a second switchable distributor pipe (12) is provided.

14. Internal combustion engine (1) according to one of Claims 1 to 13, **characterized in that** provision is made in the second distributor pipe (4) of a switching flap (13), by way of which the size of the equivalent distributor pipe diameter ($D_V$) is able to be set.

15. Internal combustion engine (1) according to one of Claims 1 to 14, **characterized in that** the internal combustion engine (1) has an exhaust-gas turbocharger with an adjustable turbine geometry.

16. Internal combustion engine (1) according to one of Claims 1 to 15, **characterized in that** an additional increase in the charge pressure by the compressor (8) is able to be set, wherein the set charge pressure values are between 5% and 15% greater than a value which is between 0.9 bar and 1,5 bar.

17. Internal combustion engine (1) according to one of Claims 1 to 16, **characterized in that** the expansion obtainable within the air intake system (3) is able to be set as a function of operating parameters, in particular the rotational speed ($n_N$) of the internal combustion engine (1).


**Revendications**

1. Moteur à combustion interne (1) comprenant une pluralité de cylindres (2), un système d'aspiration d'air (3), un compresseur (8) destiné à transporter l'air de combustion et une chambre de combustion disposée dans le cylindre (2) et délimitée entre un piston et une culasse,

 - le système d'aspiration d'air (3) étant formé d'au moins un tuyau de distribution (4), d'une pluralité de tuyaux d'aspiration (7) et d'au moins un collecteur (6), le collecteur (6) étant positionné entre le tuyau de distribution (4) et les tuyaux d'aspiration {7},
 - l'air de combustion étant acheminé au système d'aspiration d'air (3) par le biais d'un conduit d'amenée d'air (5) qui débouche dans le tuyau de distribution (4), et
 - la pression de suralimentation (p) de l'air de combustion étant réduite de la sortie du compresseur (8) jusqu'à l'entrée dans la chambre de combustion du moteur à combustion interne (1),

 **caractérisé en ce que**

 - le système d'aspiration d'air (3) est conçu de telle sorte qu'au moins une partie de la masse d'air entre dans la chambre de combustion du moteur à combustion interne {1} pendant une phase d'expansion de la masse d'air dans le système d'aspiration d'air, une expansion continue, mais pas nécessairement uniforme, entre l'entrée de l'air de combustion dans le tuyau de distribution (4) et l'entrée de l'air de combustion dans la chambre de combustion pouvant être atteinte.

**2.** Moteur à combustion interne (1) selon la. revendication 1, **caractérisé en ce qu'**une longueur de tuyau de distribution est dimensionnée de telle sorte qu'une réduction de la pression de suralimentation (P) dans le système d'aspiration d'air (3) peut être obtenue au moment de l'aspiration d'air.

**3.** Moteur à combustion interne (1) selon la revendication 1 ou 2, **caractérisé en ce que** la température de la masse d'air, aspirée par le cylindre respectif, est réduite au moment de l'aspiration d'air entre le collecteur (6), et la chambre de combustion du moteur à combustion interne (1).

**4.** Moteur à combustion interne (1) selon la revendication 3, **caractérisé en ce que** la réduction de la température de la masse d'air au-dessous de la valeur de température moyenne ($T_{moyenne}$) est effectuée dans la plage angulaire de vilebrequin comprise entre 50° après le point mort haut de cycle de charge (LW-OT) et 40° après le point mort bas de cycle de charge (UT), en particulier entre 90° après le point mort haut d'échange de charge (LW-OT) et 20° après le point mort bas d'échange de charge (UT).

**5.** Moteur à combustion interne (1) selon l'une des revendications 1 à 4, **caractérisé en ce que** le système d'aspiration d'air (3) est conçu de telle sorte qu'une longueur de tuyau de distribution (Lv) est dimensionnée en fonction d'un diamètre de tuyau de distribution équivalent (Dv).

**6.** Moteur à combustion interne (1) selon la revendication 5, **caractérisé en ce que** le choix de la longueur de tuyau de distribution (Lv) est effectué en fonction d' un diamètre de tuyau de distribution équivalent (Dv) de telle sorte que le rapport du diamètre de tuyau de distribution équivalent (Dv) à la longueur de tuyau de distribution (Lv) est de 0,05 à 0,14, ou de 0,06 à 0,13.

**7.** Moteur à combustion interne (1) selon l'une des revendications 1 à 6, **caractérisé en ce que** le système d'aspiration d'air (3) est conçu de telle sorte que la longueur de tuyau d'aspiration ($L_s$) soit inférieure à 200 mm ou à 150 mm.

**8.** Moteur à combustion interne (1) selon l'une des revendications 1 à 7, **caractérisé en ce que** le système d'aspiration d'air (3) comporte deux collecteurs (6), le tuyau de distribution (4) étant formé d'un module de distribution (4a) et de deux parties de tuyau de distribution (4b), chaque partie de tuyau de distribution (4b) étant positionnée entre le module de distribution (4a) et l'un des collecteurs (6).

**9.** Moteur à combustion interne (1) selon l'une des revendications 1 à 8, **caractérisé en ce que** le moteur à combustion interne (1) est conçu comme un moteur à combustion interne à allumage par étincelle, en particulier du type à cylindres opposés, le nombre de cylindres (2) étant de quatre, six ou huit.

**10.** Moteur à combustion interne (1) selon l'une des revendications 1 à 9, **caractérisé en ce que** la longueur de tuyau de distribution (Lv) est supérieure à une longueur $L_1$ qui est déterminée par une première formule ;

$$L_1 = 200 - 4/3 * L_s + 1,7 * n_N^{-2,22} * (D_v - 30)$$

$L_s$ correspondant à la longueur de tuyau d'aspiration respective, $n_N$ correspondant à la vitesse de rotation nominale du moteur à combustion interne (1) et $D_v$ correspondant au diamètre de tuyau de distribution équivalent.

**11.** Moteur à combustion interne (1) selon l'une des revendications 1 à 9, **caractérisé en ce que** la longueur de tuyau de distribution ($L_v$) est inférieure à une longueur ($L_2$) qui est déterminée par une deuxième formule :

$$L_2 = 7,2 * 10^6 / n_N - 1,5 * L_s$$

$L_s$ correspondant à la longueur respective du tuyau d'aspiration (7) et $n_N$ correspondant à la vitesse de rotation nominale du moteur à combustion interne (1).

**12.** Moteur à combustion interne (1) selon l'une des revendications 1 à 9, **caractérisé en ce que** la longueur de tuyau de distribution ($L_v$) est supérieure à une longueur ($L_3$) qui est déterminée par une troisième formule :

$$L_3 = 34*D_V - 650*4/3 \; L_s$$

$L_s$ correspondant à la longueur de tuyau d'aspiration respective et $D_V$ correspondant au diamètre de tuyau de distribution équivalent.

13. Moteur à combustion interne (1) selon l'une des revendications 1 à 12, **caractérisé en ce qu'**il est prévu un deuxième tube de distribution commutable (12).

14. Moteur à combustion interne (1) selon l'une des revendications 1 à 13, **caractérisé en ce qu'**un volet de commutation (13), permettant de régler la dimension du diamètre de tuyau de distribution équivalent ($D_V$), est prévu dans le deuxième tuyau de distribution (4).

15. Moteur à combustion interne (1) selon l'une des revendications 1 à 14, **caractérisé en ce que** le moteur à combustion interne (1) comporte un turbocompresseur à gaz d'échappement à géométrie de turbine réglable.

16. Moteur à combustion interne (1) selon l'une des revendications 1 à 15, **caractérisé en ce qu'**une augmentation supplémentaire de la pression de suralimentation à travers le compresseur (8) est réglable, les valeurs de pression de suralimentation réglées étant supérieures de 5 % à 15 % à une valeur comprise entre 0,9 bar et 1,5 bar.

17. Moteur à combustion interne (1) selon l'une des revendications 1 à 16, **caractérisé en ce que** l'expansion pouvant être atteinte dans le système d'aspiration d'air (3) peut être réglée en fonction de paramètres de fonctionnement, en particulier de la vitesse de rotation ($n_N$) du moteur à combustion interne (1).

Fig. 1

Fig. 2

Fig. 3

Fig. 4

Fig. 5

Fig. 6

Fig. 7

EP 2 017 447 B1

Fig. 8

Fig. 9

Fig. 10

Fig. 11

Temperatur der Ladeluft am Einlassventil bei Eilass schliesst
6Zyl.-Motor, Vollast im oberen Drehzahlbereich

Max. Drehzahl

TB

149 °C

185 °C

$L_V$

$D_V$

Nenndrehzahl

TB

128 °C

166 °C

$L_V$

$D_V$

72% der max. Drehzahl

TB

115 °C

146 °C

$L_V$

$D_V$

Fig. 12

Ladeluft-Massenstrom und Temperatur bei 333 °KW

332.63°

Fig. 13

Ladeluft-Massenstrom und Temperatur bei 397 °KW

396.76°

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3908475
- DE 10002482 A1
- DE 3627312 A1